# EUROPEAN PATENT SPECIFICATION

(11) **EP 3 034 357 B1**
(45) Date of publication and mention of the grant of the patent: **27.11.2019**
(21) Application number: 14198545.7
(22) Date of filing: 17.12.2014
(51) Int. Cl.: B60P 3/42

(54) **Tool carrier platform for self-propelled vehicles and self-propelled vehicle including it**
Werkzeugträger-Plattform für selbstfahrende Fahrzeuge und selbstfahrende Fahrzeug
Porte-outil pour véhicules automoteurs, véhicule automoteur

(43) Date of publication of application: 22.06.2016
(73) Proprietor: Cormidi S.r.l., 84069 Roccadaspide (Salerno) (IT)
(72) Inventor: Cormidi, Armando, 84069 Roccadaspide (SALERNO) (IT)
(74) Representative: Leone, Mario

(56) References cited:
- EP-A1- 2 080 730
- FR-A1- 2 926 758
- US-A- 5 573 300
- US-A1- 2005 196 261

## Description

The present invention has as subject a tool-carrying basis, apt to be used on the floor of a self-propelled vehicle, for assembling tools, and a self-propelled vehicle using it.

One of the main requirements upon using self-propelled vehicles, in particular in the field of construction sites, is to be able to have available flexibility as much as possible.

Self-propelled vehicles, in particular of the type with small sizes, can be used both to assemble caissons, tilting caissons and other containers for transporting objects, liquids and so on, and to constitute the basis of the most different tools, such crane arms with different shapes.

On this matter, on the self-propelled vehicle it should be possible to assemble such tools in a quick and safe way, with the minimum number of mechanical procedures.

However, the known solutions do not meet the above-mentioned flexibility, safety and quickness requirements.

French patent application No. FR 2,926,758 discloses a vehicle with a lockable sliding platform for mounting tools.

Further tool carrier vehicles are known from European patent application No. EP 2,080,730 A1, from US patent No. US 5,573,300 A, and from US patent application No. US 2005/196,261.

The technical problem underlying the present invention is to provide a self-propelled vehicle equipped with a tool-carrying basis allowing to obviate the drawback mentioned by referring to the known art.

Such problem is solved by a self-propelled vehicle as defined in appended claim 1.

The main advantage of the self-propelled vehicle according to the present invention lies in the fact of allowing a quick assembly of a basis able to allow to assemble many tools.

The present invention will be described hereinafter according to a preferred embodiment example thereof provided by way of example and not for limitative purpose with reference to the enclosed drawings wherein:
- figures 1A and 1B show respective axonometric views of a tool-carrying basis according to the invention in two different assembly configurations;
- figure 2 illustrates different phases for assembling the tool-carrying basis of figure 1 on a self-propelled vehicle properly modified according to the invention;
- figure 3 shows some assembling complements of the tool-carrying basis of figure 1 on a self-propelled vehicle;
- figure 4 shows a detail of the self-propelled vehicle of figure 2;
- figure 5 shows an enlarged axonometric view of the self-propelled vehicle of figure 1; and
- figures 6A, 6B, 6C, 6D and 6E show different phases for assembling the tool-carrying basis of figure 1.

With reference to the figures, a tool-carrying basis is designated as a whole with 1. It is constituted by a sliding plate with rectangular shape, equipped at the centre with an opening 2 for assembling (not represented) tools.

The opening 2 is arranged at the centre in a depressed area of the plate. At the longitudinal edges thereof, the sliding plate comprises respective guides 3 with grooves facing downwards.

The plate at its ends has a front side, which is apt to be positioned on the front portion of a self-propelled vehicle forming an access side of the plate, and a rear side. On the front side the guides 3 have respective first locking holes 4, aligned therebetween.

At the rear side, the plate comprises a back 5 apt to be rested against the rear portion of a self-propelled vehicle; at the sides of the back 5, the plate 1 comprises respective second locking holes 6, directed with their axis perpendicularly to the back 5.

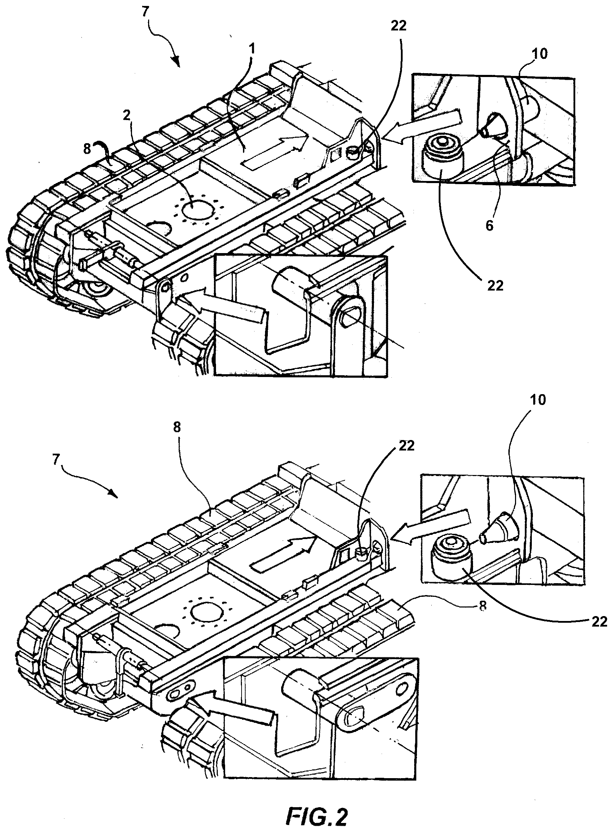

By referring to figure 2, a self-propelled vehicle 7 comprises a frame, a (not visible) engine, a front access side and a rear side wherein the (not represented) guiding position is formed. The frame is equipped with tracks 8 extending longitudinally withe respect to the vehicle 7.

The frame comprises a pair of longitudinal rails 9 extending between the front and rear sides. They are complementary to the grooves of the above-mentioned guides 3 which, altogether, implement respective sliding guides of the plate 1.

At the rear side, the frame of the vehicle 7 comprises projecting pins 10 positioned so as to be able to insert into said second locking holes 6.

At the access side, the rails 9 end with respective hooks 11 which, after having finished to insert the plate 1, correspond to said first locking holes 4.

Furthermore, the rails, at the front end thereof, comprise further third locking holes 12.

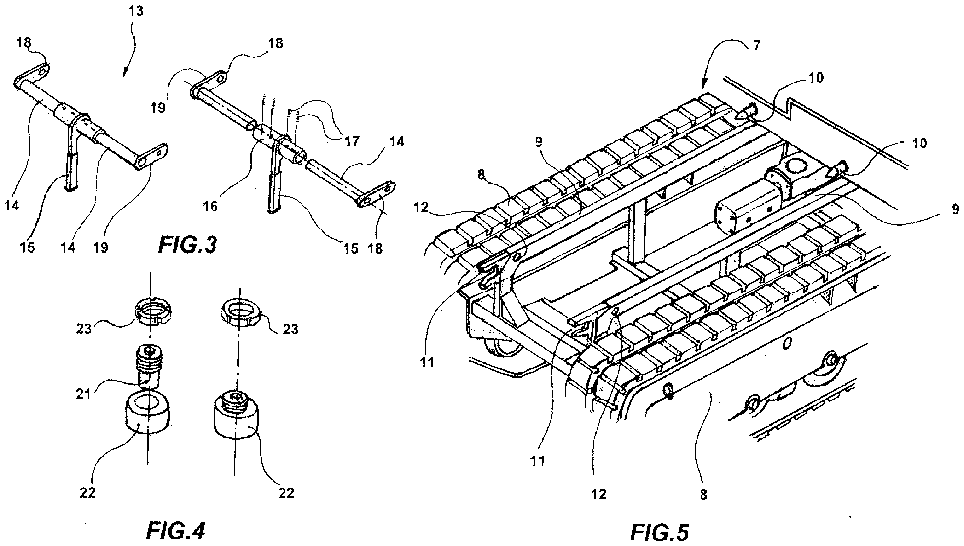

At last, the vehicle 7 comprises a locking device 13 (figure 3) comprising a pair of cross arms 14 separated by a central lever 15, perpendicular thereto.

The arms 14 can be detached and engage the lever 15 at one seat thereof 16 aligning them. The fastening between seat 16 and arms 14 is completed by means of inserting elastic plugs 17 in suitable holes.

Each arm has a distal end comprising locking small arms 19 perpendicular to the arms 14, comprising respective fourth locking holes 18.

On the guides 3 of the plate 1 there are even fifth locking holes 20 at the front side. As it can be seen, third, fourth and fifth locking holes 12, 18, 20 are destined to align therebetween upon locking.

On the rear side, at last, the plate 1 comprises a registration pin 21 on each side, inserted into a respective registration seat 22 and equipped with a ring nut 23 (figure 4).

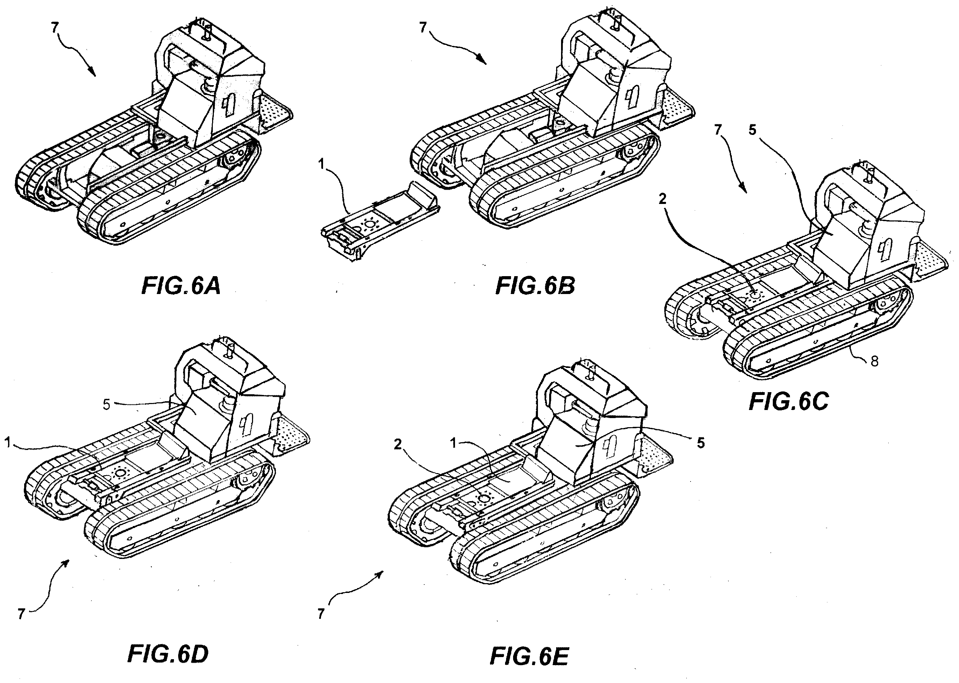

By referring to figures 6A to 6E, the vehicle 7 (figure 6A), properly positioned, and the plate 1 (figure 6B) are aligned therebetween so that the grooves faced downwards of the plate 7 are in line with the rails 9 of the vehicle 7. Then, the plate 1 is made to slide on the frame of the vehicle 7 until the back 5 rests on the rear side of the vehicle 7, that is on the guiding position thereof.

In this position (figure 6D), the pins 10 engage the second locking holes 6.

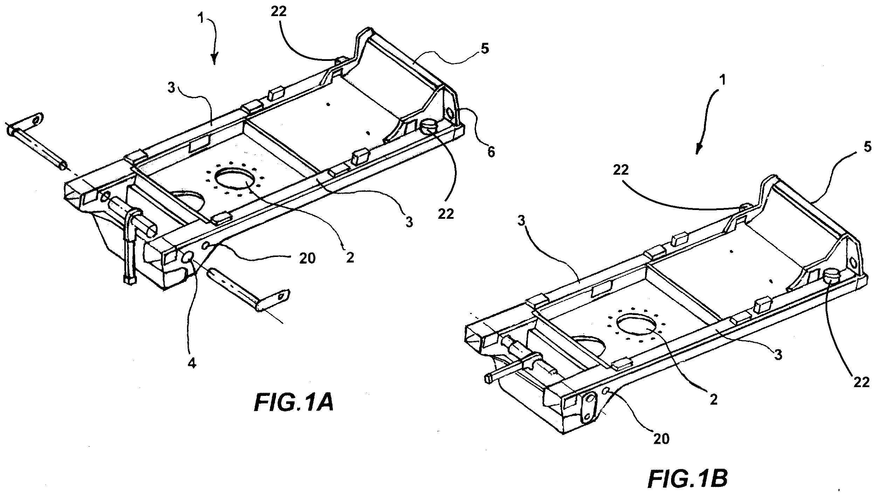

Furthermore, the arms 14 are inserted through the first locking holes 14 and the hooks 11 and are joined in the seat 16 of the lever 15 (figures 1A and 2), then locked with the elastic plugs 17.

At this point (figure 6E), the lever 15 is rotated by 90° by bringing said third, fourth and fifth locking holes 12, 18 20 in alignment: they are thus engaged by a locking pin 25 (figure 2).

At last, the residual backlashes between plate 1 and frame are eliminated by acting on the ring nuts 23 adjusting the position of registration pin 21 on the frame.

To the above-described self-propelled vehicle with tool-carrying platform a person skilled in the art, in order to satisfy additional and contingent needs, can introduce several additional modifications and variants, all however within the protective scope of the present invention, as defined by the enclosed claims.

## Claims

1. A self-propelled vehicle (7) provided with a tool-carrying platform, **characterized in that** it comprises:
• a frame including a pair of horizontal guides (9), extending longitudinally with respect to the self-propelled vehicle (7), wherein an end is arranged at an access side;
• a sliding plate (1), apt to slide on said guides (3, 9) equipped with front (4, 20) and rear (6) locking holes;
• means for locking the sliding plate on the frame of the self-propelled vehicle (7), acting on said front (4, 20) and rear (6) locking holes; and
• registration means (21, 22, 23), able to eliminate the residual backlash between the plate (1) and the frame, by forming a tool-carrying platform,
wherein said horizontal guides are formed by grooves at the longitudinal edges of the sliding plate (1) and by corresponding rails (9) of the frame of the self-propelled vehicle (7), the front locking holes (4) being intended to be aligned with respective hooks (11) on the front ends of said rails (9), said rails (9), at the front end thereof, comprising additional locking holes (12),
and wherein it comprises a locking device (13) having a pair of cross arms (14) which can be detached and they are separated by a central lever (15), perpendicular thereto, wherein the plate (1) comprises a registration pin (21) on each side, inserted in a respective registration seat (22) and equipped with a ring nut (23).

2. The self-propelled vehicle (7) according to claim 1, wherein the rear locking holes (6) are engaged by respective projecting pins (10) of the frame, positioned so as to be able to insert into said rear locking holes (6) .

3. The self-propelled vehicle (7) according to claim 1, wherein the arms (14) have a distal end comprising locking small arms (19) perpendicular to the arms (14), comprising respective locking holes (18) apt to be aligned, by means of rotating said lever (15), with the locking holes (12, 20) of the rails (9) and of the guides (3) of the plate (1) .

## Patentansprüche

1. Selbstfahrendes Fahrzeug (7), bereitgestellt mit einer Werkzeug tragenden Plattform, **dadurch gekennzeichnet, dass** es aufweist:
• einen Rahmen, aufweisend ein Paar horizontaler Führungen (9), die sich in Längsrichtung in Bezug auf das selbstfahrende Fahrzeug (7) erstrecken, wobei ein Ende an einer Zugangsseite angeordnet ist;
• eine Gleitplatte (1), die geeignet ist, um auf den Führungen (3, 9) zu gleiten, ausgestattet mit vorderen (4, 20) und hinteren (6) Verriegelungslöchern;
• Mittel zum Verriegeln der Gleitplatte auf dem Rahmen des selbstfahrenden Fahrzeugs (7), die auf die vorderen (4, 20) und hinteren (6) Verriegelungslöcher einwirken; und
• Passmittel (21, 22, 23), die in der Lage sind, das verbleibende Spiel zwischen der Platte (1) und dem Rahmen zu beseitigen, durch Bildung einer werkzeugtragenden Plattform,
wobei die horizontalen Führungen durch Nuten an den Längskanten der Gleitplatte (1) und durch korrespondierende Schienen (9) des Rahmens des selbstfahrenden Fahrzeugs (7) gebildet sind, wobei die vorderen Verriegelungslöcher (4) dazu bestimmt sind, mit entsprechenden Haken (11) an den vorderen Enden der Schienen (9) ausgerichtet zu werden, wobei die Schienen (9) an ihrem vorderen Ende zusätzliche Verriegelungslöcher (12) aufweisen,
und wobei es eine Verriegelungsvorrichtung (13) mit einem Paar Querarmen (14) aufweist, die lösbar sind und durch einen dazu senkrechten zentralen Hebel (15) getrennt sind, wobei die Platte (1) auf jeder Seite einen Passstift (21) aufweist, der in einen entsprechenden Passsitz (22) eingesetzt und mit einer Ringmutter (23) ausgestattet ist.

2. Selbstfahrendes Fahrzeug (7) nach Anspruch 1, bei dem sich die hinteren Verriegelungslöcher (6) mit jeweiligen vorstehenden Stiften (10) des Rahmens in Eingriff befinden, die so positioniert sind, dass sie in die hinteren Verriegelungslöcher (6) eingeführt werden können.

3. Selbstfahrendes Fahrzeug (7) nach Anspruch 6, bei dem die Arme (14) ein distales Ende aufweisen, aufweisend rechtwinklig zu den Armen (14) verriegelnde kleine Arme (19), aufweisend entsprechende Verriegelungslöcher (18), die geeignet sind zur Ausrichtung, durch Drehen des Hebels (15), mit den Verriegelungslöchern (12, 20) der Schienen (9) und der Führungen (3) der Platte (1).

## Revendications

1. Véhicule automoteur (7) pourvu d'une plate-forme porte-outils, **caractérisé en ce qu'**il comprend :
- un châssis comportant une paire de guides horizontaux (9) s'étendant longitudinalement par rapport au véhicule automoteur (7), dans lequel une extrémité est agencée d'un côté accès ;
- une plaque coulissante (1), apte à coulisser sur lesdits guides (3, 9) équipée d'orifices de verrouillage avant (4, 20) et arrière (6) ;
- des moyens pour verrouiller la plaque coulissante sur le châssis du véhicule automoteur (7), agissant sur lesdits orifices de verrouillage avant (4, 20) et arrière (6) ; et
- des moyens de positionnement (21, 22, 23), capables d'éliminer le jeu résiduel entre la plaque (1) et le châssis, en formant une plate-forme porte-outils,
dans lequel lesdits guides horizontaux sont formés par des rainures au niveau des bords longitudinaux de la plaque coulissante (1) et par des rails (9) correspondants du châssis du véhicule automoteur (7), les orifices de verrouillage avant (4) étant destinés à être alignés avec des crochets (11) respectifs sur les extrémités avant desdits rails (9), lesdits rails (9), au niveau de leur extrémité avant, comprenant des orifices de verrouillage supplémentaires (12),
et dans lequel il comprend un dispositif de verrouillage (13) ayant une paire de bras transversaux (14) qui peuvent être détachés et sont séparés par un levier central (15), perpendiculaire à ceux-ci, dans lequel la plaque (1) comprend une broche de positionnement (21) sur chaque côté, insérée dans un siège de positionnement (22) respectif et équipé d'un écrou à œil (23).

2. Véhicule automoteur (7) selon la revendication 1, dans lequel les orifices de verrouillage arrière (6) sont mis en prise par des broches saillantes (10) respectives du châssis, positionnées de façon à être capables de s'insérer dans lesdits orifices de verrouillage arrière (6).

3. Véhicule automoteur (7) selon la revendication 1, dans lequel les bras (14) ont une extrémité distale comprenant des petits bras de verrouillage (19) perpendiculaires aux bras (14), comprenant des orifices de verrouillage (18) respectifs aptes à s'aligner, au moyen de la rotation dudit levier (15), avec les orifices de verrouillage (12, 20) des rails (9) et des guides (3) de la plaque (1).
